(19) Europäisches Patentamt
European Patent Office
Office européen des brevets

(11) EP 3 925 776 A1

(12) EUROPEAN PATENT APPLICATION
published in accordance with Art. 153(4) EPC

(43) Date of publication:
22.12.2021 Bulletin 2021/51

(51) Int Cl.:
B32B 27/36 (2006.01)     C08J 7/04 (2020.01)

(21) Application number: 20756382.6

(22) Date of filing: 23.01.2020

(86) International application number:
PCT/JP2020/002294

(87) International publication number:
WO 2020/166297 (20.08.2020 Gazette 2020/34)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 13.02.2019 JP 2019023330

(71) Applicant: TOYOBO CO., LTD.
Osaka-shi
Osaka 530-8230 (JP)

(72) Inventors:
• TAKAGI Noriyuki
  Otsu-shi, Shiga 520-0292 (JP)
• TAKI Hiroshi
  Otsu-shi, Shiga 520-0292 (JP)
• TAKII Isao
  Otsu-shi, Shiga 520-0292 (JP)

(74) Representative: Vossius & Partner
Patentanwälte Rechtsanwälte mbB
Siebertstraße 3
81675 München (DE)

(54) LAMINATED POLYESTER FILM

(57) Provided is a laminated polyester film that is highly transparent, is resistant to blocking, and has excellent adhesion to a hardcoat layer and UV ink.

A laminated polyester film comprising a polyester film substrate and a coating layer on at least one surface of the polyester film substrate, wherein the coating layer is formed by curing a composition containing a urethane resin with a polycarbonate structure, a crosslinking agent, and a polyester resin, the maximum value of a nitrogen element distribution curve based on element distribution measurement of the coating layer in the depth direction is present in the vicinity of the surface of the coating layer on a side opposite to the polyester film substrate, and the polycarbonate structure is present in a suitable amount at the surface of the coating layer on a side opposite to the polyester film substrate.

Fig. 2

## Description

Technical Field

The present invention relates to a laminated polyester film. More specifically, the present invention relates to a laminated polyester film comprising a readily adhesive coating layer that is highly suitable for use in all fields, such as optics, packaging, labeling, etc.

Thermoplastic resin films, in particular, polyester films, have excellent properties in terms of mechanical properties, electrical properties, dimensional stability, transparency, chemical resistance, etc. Therefore, such films can find wide application, for example, in magnetic recording materials; packaging materials; solar-cell applications; antireflection films for use in flat displays etc.; diffusion sheets; optical films such as prism sheets; and films for label printing. However, in such applications, when another material is applied to form a layer on a polyester film, the polyester film has a drawback such that the material may poorly adhere to the polyester film, depending on the material used.

Accordingly, as one of the methods to impart adhesion to the surface of a polyester film, a method is known that comprises applying one or more of various resins to the surface of the polyester film to form a readily adhesive coating layer.

Heretofore, a technique has been known that allows for easy adhesion in hard coating, prism lens processing, or the like by forming a coating layer using a copolyester resin and a urethane resin (Patent Literature (PTL) 1). However, this conventional technique has problems in regards to poor resistance to blocking, and insufficient adhesion to UV ink used in label printing.

Another technique has also been known; this technique provides easy adhesion in hard coating particularly used in the production of a front sheet for solar cells, by forming a coating layer using a urethane resin and a block isocyanate (Patent Literature (PTL) 2. However, this conventional technique has a problem in regards to low transparency.

Still another technique to provide easy adhesion to label processing by forming a coating layer using an acrylic copolymer and a polymer having an oxazoline group has been known (Patent Literature (PTL) 3). However, this conventional technique has a problem in regards to insufficient adhesion to a hardcoat layer.

Citation List

Patent Literature

PTL 1: JP2000-229355A
PTL 2: JP2016-015491A
PTL 3: JP2004-82369A

Summary of Invention

Technical Problem

The present invention was made in view of the above problems of the prior art. More specifically, an object of the present invention is to provide a laminated polyester film that is highly transparent, is resistant to blocking, and has excellent adhesion to a hardcoat layer and excellent adhesion to UV ink.

Solution to Problem

To achieve the above object, the present inventors investigated causes etc. of the above problems. During their investigation, the inventors found that when a laminated polyester film has a coating layer comprising a crosslinking agent, a urethane resin having a polycarbonate structure, and a polyester resin on at least one surface of the polyester film substrate and the proportions of nitrogen atoms in the coating layer and the proportion of OCOO bonds at the surface of the coating layer on a side opposite to the polyester film substrate satisfy specific conditions, the object of the present invention can be achieved. The inventors have accomplished the present invention based on these findings.

The above object can be achieved by the following solutions.

1. A laminated polyester film comprising a polyester film substrate and a coating layer on at least one surface of the polyester film substrate, the coating layer being formed by curing a composition containing a urethane resin with a polycarbonate structure, a crosslinking agent, and a polyester resin,

wherein in a nitrogen element distribution curve based on element distribution measurement of the coating layer in a depth direction by X-ray photoelectron spectroscopy, when the proportion of nitrogen atoms at a surface of the coating layer on a side opposite to the polyester film substrate is A (at%), the maximum value of the proportion of nitrogen atoms is B (at%), the etching time at which the proportion of nitrogen atoms becomes the maximum value B (at%) is b (sec), and the etching time at which the proportion of nitrogen atoms becomes one-half of B (at%) after b (sec) is c (sec), the following formulas (i) to (iii) are satisfied; and

in a surface analysis spectrum measured by X-ray photoelectron spectroscopy, when the total area of peaks derived from bond species in a C1s spectral region is 100%, and the area of a peak derived from an OCOO bond is X (%), the following formula (iv) is satisfied:

$$\text{(i)} \quad 0.5 \leq B - A \text{ (at\%)} \leq 3$$

$$\text{(ii)} \quad 30 \leq b \text{ (sec)} \leq 180$$

$$\text{(iii)} \quad 30 \leq c - b \text{ (sec)} \leq 300$$

$$\text{(iv)} \quad 2.0 \leq X \text{ (\%)} \leq 10.0.$$

2. The laminated polyester film according to Item 1, which has a haze of 1.5% or less.

Advantageous Effects of Invention

The laminated polyester film of the present invention is highly transparent, is resistant to blocking, and has excellent adhesion to a hardcoat layer and excellent adhesion to UV ink. In particular, the laminated polyester film has excellent adhesion to UV ink after processing with low-dose UV.

Brief Description of Drawings

Fig. 1 is a nitrogen element distribution curve of the laminated polyester film obtained in Example 2, based on element distribution measurement in the depth direction by X-ray photoelectron spectroscopy.
Fig. 2 is an illustration of how to obtain B - A, b, and c - b from the nitrogen element distribution curve, based on element distribution measurement in the depth direction by X-ray photoelectron spectroscopy.
Fig. 3 is a nitrogen element distribution curve of the laminated polyester film obtained in Example 5, based on element distribution measurement in the depth direction by X-ray photoelectron spectroscopy.
Fig. 4 is a nitrogen element distribution curve of the laminated polyester film obtained in Comparative Example 6, based on element distribution measurement in the depth direction by X-ray photoelectron spectroscopy.
Fig. 5 is a graph showing C1s spectrum analysis results of the coating layer surface region of the laminated polyester film obtained in Example 6.
Fig. 6 is a graph showing C1s spectrum analysis results of the coating layer surface region of the laminated polyester film obtained in Comparative Example 1.

Description of Embodiments

Polyester Film Substrate

In the present invention, the polyester resin forming the polyester film substrate is, for example, polyethylene terephthalate, polybutylene terephthalate, polyethylene-2,6-naphthalate, polytrimethylene terephthalate, or a copolyester resin in which a portion of the diol component or dicarboxylic acid component of a polyester resin described above is replaced by a copolymerization component. Examples of copolymerization components include diol components, such as diethylene glycol, neopentyl glycol, 1,4-cyclohexanedimethanol, and polyalkylene glycol; dicarboxylic acid components, such as adipic acid, sebacic acid, phthalic acid, isophthalic acid, 5-sodium isophthalic acid, and 2,6-naphthalenedicarboxylic acid; and the like.

The polyester resin preferably used in the present invention is mainly selected from polyethylene terephthalate, polytrimethylene terephthalate, polybutylene terephthalate, and polyethylene-2,6-naphthalate. Among these polyester resins, polyethylene terephthalate is most preferred in terms of the balance between physical properties and cost. The polyester film substrate formed from such a polyester resin is preferably a biaxially stretched polyester film, and can improve chemical resistance, heat resistance, mechanical strength, and the like.

The catalyst for polycondensation used in the production of the polyester resin is not particularly limited. Antimony trioxide is suitable because it is an inexpensive catalyst with excellent catalytic activity. It is also preferable to use a germanium compound or a titanium compound. More preferred examples of polycondensation catalysts include a catalyst containing aluminum and/or a compound thereof, and a phenolic compound, a catalyst containing aluminum and/or a compound thereof, and a phosphorus compound, and a catalyst containing an aluminum salt of a phosphorus compound.

The polyester film substrate in the present invention may be a single-layer polyester film, a polyester film with a two-layer structure in which the components in the layers are different, or a polyester film substrate composed of at least three layers including outer layers and an inner layer.

Explanation of Characteristic Values in Present Invention

The laminated polyester film of the present invention preferably comprises a coating layer on at least one surface of the polyester film substrate described above. The coating layer is formed by curing a composition containing a urethane resin with a polycarbonate structure, a crosslinking agent, and a polyester resin. The expression "formed by curing a composition" is used here because it is extremely difficult to accurately express the chemical composition in the state in which the urethane resin with a polycarbonate structure, the crosslinking agent, and the polyester resin are cured by forming a crosslinked structure with the crosslinking agent. It is preferred that the maximum value of a nitrogen element distribution curve based on element distribution measurement of the coating layer in the depth direction is present in the vicinity of the surface of the coating layer on a side opposite to the polyester film substrate, in terms of achieving improved transparency, blocking resistance, and adhesion to a hardcoat layer. Further, it is preferred that a polycarbonate structure is present in a suitable amount at the surface of the coating layer on a side opposite to the polyester film substrate, in terms of achieving improved adhesion to UV ink after processing with low-dose UV.

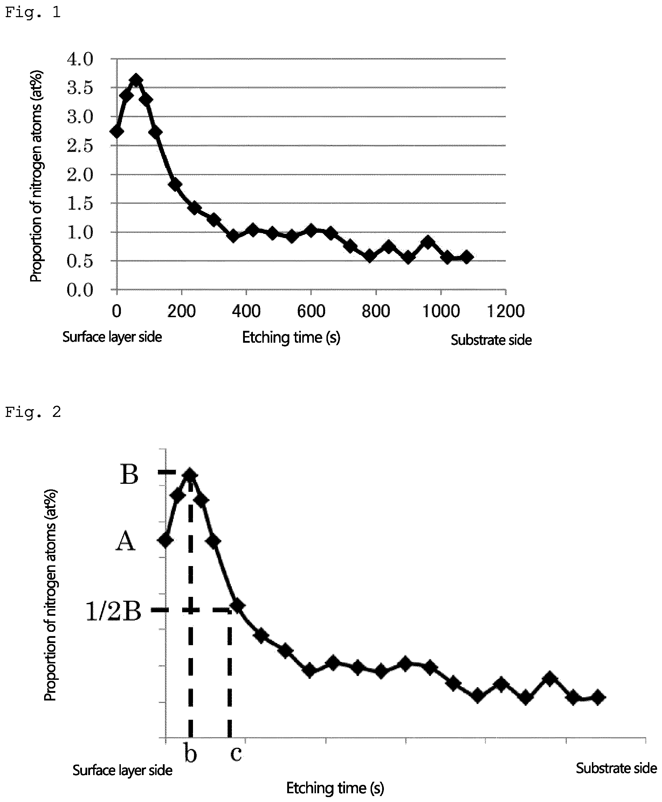

The characteristics of the coating layer in the laminated polyester film are described below. First, a nitrogen element distribution curve based on element distribution measurement of the coating layer in the depth direction is drawn by using X-ray photoelectron spectroscopy (ESCA). Specifically, spectrum collection is performed every 30 seconds until the etching time reaches 120 seconds, and then spectrum collection is performed every 60 seconds thereafter. As shown in Fig. 2, the time of etching from the coating layer surface (unit: sec) is plotted on the abscissa, the proportion of the amount of nitrogen atoms relative to the total amount of carbon, oxygen, nitrogen, and silicon atoms (the proportion of nitrogen atoms; unit: at%) is plotted on the ordinate, the proportion of nitrogen atoms at the surface of the coating layer on a side opposite to the polyester film substrate is A (at%), the maximum value of the proportion of nitrogen atoms is B (at%), the etching time at which the proportion of nitrogen atoms becomes the maximum value B (at%) is b (sec), and the etching time at which the proportion of nitrogen atoms becomes 1/2 B (at%) after b (sec) is c (sec). From the read data, B - A (at%) and c - b (sec) are calculated. The proportion of nitrogen atoms (A (at%)) at the surface of the coating layer on a side opposite to the polyester film substrate is the proportion of nitrogen atoms at an etching time of 0 seconds.

When the characteristic values read from the nitrogen element distribution curve based on the element distribution measurement of the coating layer in the depth direction satisfy the following relationships, a laminated polyester film having excellent transparency, blocking resistance, and adhesion to a hardcoat layer is obtained.

$$\text{(i)} \quad 0.5 \leq B - A \text{ (at\%)} \leq 3.0$$

$$\text{(ii)} \quad 30 \leq b \text{ (sec)} \leq 180$$

$$\text{(iii)} \quad 30 \leq c - b \text{ (sec)} \leq 300$$

The lower limit of B - A is preferably 0.5 at%, more preferably 0.6 at%, even more preferably 0.7 at%, particularly preferably 0.8 at%, and most preferably 0.9 at%. It is preferred that B - A is 0.5 at% or more because the amount of the urethane resin component with toughness is sufficient, and blocking resistance is obtained. This is also preferred because the adhesion to a hardcoat layer is improved. The upper limit of B - A is preferably 3.0 at%, more preferably 2.9 at%, even more preferably 2.8 at%, particularly preferably 2.7 at%, and most preferably 2.5 at%. It is preferred that B - A is 3.0 at% or less because the haze is low, and transparency is obtained.

The lower limit of b is preferably 30 seconds. It is preferred that b is 30 seconds or more because the toughness of the surface of the coating layer on a side opposite to the polyester film substrate is maintained, and blocking resistance is obtained. The upper limit of b is preferably 180 seconds, more preferably 120 seconds, even more preferably 90 seconds, and particularly preferably 60 seconds. It is preferred that b is 180 seconds or less because the toughness of the surface of the coating layer on a side opposite to the polyester film substrate is maintained, and good blocking resistance is obtained. This is also preferable because the adhesion to a hardcoat layer is improved.

The upper limit of c - b is preferably 300 seconds, more preferably 240 seconds, and even more preferably 180 seconds. It is preferred that c - b is 300 seconds or less because the urethane resin component in the coating layer does not become excessive, the haze is low, and transparency is obtained. The lower limit of c - b is 30 seconds or more because spectrum collection is performed every 30 seconds from the start of measurement to an etching time of 120 seconds.

In the present invention, many portions of the polycarbonate structure in the urethane resin in the coating layer forming the laminated polyester film are preferably localized at the surface of the coating layer on a side opposite to the polyester film substrate. This is because the presence of a suitable amount of portions of the polycarbonate structure at the surface improves adhesion to ultraviolet-curable (UV) ink. On the other hand, the inventors also found that when portions of the polycarbonate structure are present at the surface, the blocking resistance may not necessarily be sufficient because of increased flexibility. Thus, as mentioned above, when the characteristic values read from the nitrogen element distribution curve based on the element distribution measurement of the coating layer in the depth direction satisfy the following relationships, a superior laminated polyester film having transparency, blocking resistance, and adhesion to a hardcoat layer is obtained.

$$(i)\ 0.5 \leq B - A\ (at\%) \leq 3.0$$

$$(ii)\ 30 \leq b\ (sec) \leq 180$$

$$(iii)\ 30 \leq c - b\ (sec) \leq 300$$

In the laminated polyester film of the present invention, the means for satisfying the above formulas (i) to (iii) are, for example, that when the urethane resin with a polycarbonate structure, which forms the coating layer, is synthesized and polymerized, the synthesis and polymerization are performed using a polycarbonate polyol component and a polyisocyanate component; that the mass ratio of the polycarbonate polyol component to the polyisocyanate component is within the range of 0.5 to 2.5; that the polycarbonate polyol component has a molecular weight of 500 to 1800; and that the content of the crosslinking agent is 10 to 50 mass%, on a solids basis, based on the total solids content of the polyester resin, the urethane resin, and the crosslinking agent in a coating liquid taken as 100 mass%. As the crosslinking agent, a blocked isocyanate is used, and the use of a blocked isocyanate containing three or more isocyanate groups enables efficient adjustment of B - A. It is usually difficult to achieve formulas (i) to (iii) by simply adopting only one or two of these means for satisfying formulas (i) to (iii) described above. Formulas (i) to (iii) can be effectively satisfied by adopting these means as thoroughly as possible.

As described above, many portions of the polycarbonate structure in the urethane resin in the coating layer of the present invention are preferably present in a certain percentage at the surface of the coating layer on a side opposite to the polyester film substrate. In the present invention, in a surface analysis spectrum measured by X-ray photoelectron spectroscopy, the total area of peaks derived from bond species in a C1s spectral region is expressed as 100%, and the area of a peak derived from an OCOO bond (which is a polycarbonate structure) is expressed as a percentage thereof, i.e., as X (%).

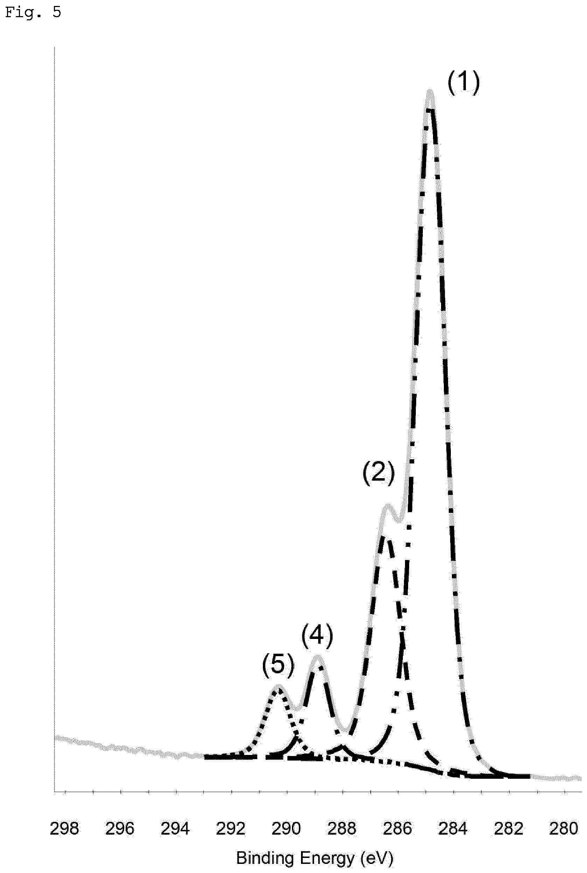

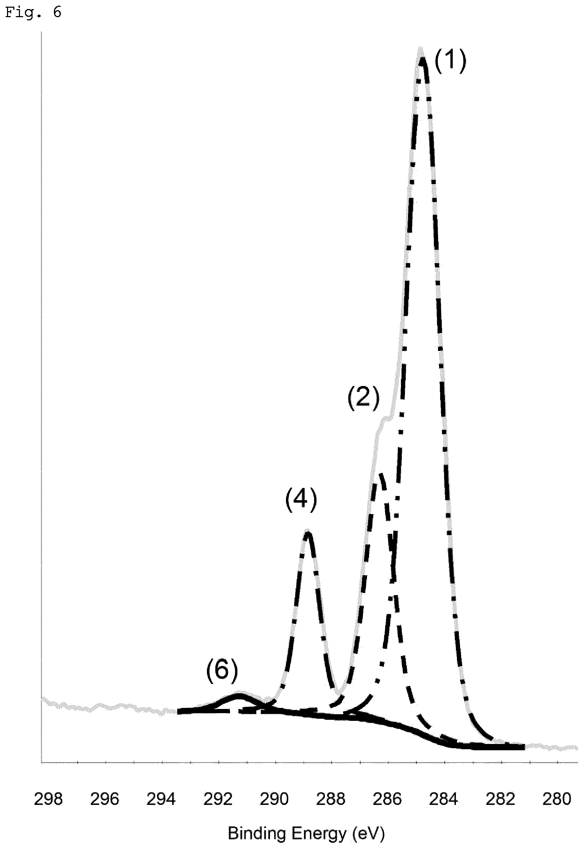

The proportion of OCOO bonds (which are a polycarbonate structure) in the surface region, i.e., X (%), is evaluated by X-ray photoelectron spectroscopy (ESCA). Figs. 5 and 6 are examples of graphs showing the analysis results of C1s spectra in the surface regions of the laminated polyester films of Example 6 and Comparative Example 1 described later, respectively. Gray solid lines show actual measurement data of the C1s spectra. The obtained peaks in the actual measurement spectra are separated into a plurality of peaks, and the bond species corresponding to the peaks are identified from the position and shape of each peak. Further, curve-fitting can be performed on the peaks derived from the bond species to calculate peak areas. The coating layer in the present invention contains the urethane resin with a polycarbonate structure, the crosslinking agent typified by a blocked isocyanate containing three or more isocyanate groups, and the polyester resin. In the coating layer, the peaks of bond species (1) to (6) listed in Table 1 can be detected. The bond species corresponding to peaks (1) to (6) in Table 1 are not necessarily the only bond species listed in Table 1; they may also include traces of similar bond species. In Fig. 5 for Example 6, no C=O bond peak in (3) and no $\pi$-$\pi$* bond peak in (6) in Table 1 appear. In Fig. 6 for Comparative Example 1, no C=O bond peak in (3) and no OCOO bond peak in (5) in Table 1 appear. It can be said that the proportion of OCOO bonds in the surface region, i.e., X (%), is expressed as the percentage (%) of the area of peak (5), based on the total area of peaks (1) to (6) taken as 100%.

Table 1

|  | Bond species |
|---|---|
| (1) Black two-dot chain line | C-C bond |
| (2) Black dashed line | C-O bond, C-N bond |
| (3) Black three-dot chain line | C=O bond |
| (4) Black one-dot chain line | COO bond |
| (5) Black dotted line | OCOO bond |
| (6) Black solid line | $\pi$-$\pi$* bond |

A suitable range of the peak area (X (%)) derived from an OCOO bond is as follows. The lower limit of X is preferably 2.0%, more preferably 2.5%, even more preferably 3.0%, particularly preferably 3.5%, and most preferably 4.0%. It is preferred that X is 2.0% or more because ink adhesion can be effectively satisfied. The upper limit of X is preferably 10.0%, more preferably 9.0%, even more preferably 8.0%, particularly preferably 7.5%, and most preferably 7%. It is preferred that X is 10.0% or less because the flexibility of the surface layer does not become overly high, and blocking resistance is easily obtained.

In the method for producing the laminated polyester film of the present invention, it is preferred that when the urethane resin with a polycarbonate structure, which forms the coating layer, is synthesized and polymerized, the mass ratio of the polycarbonate polyol component to the polyisocyanate component is 0.5 or more; and that the urethane resin content is 5 to 50 mass%, based on the total solids content of the polyester resin, the urethane resin with a polycarbonate structure, and the crosslinking agent in the coating liquid taken as 100 mass%. This is because characteristic value X in the range of 2.0 to 10.0% based on the C1s spectral region can be effectively achieved.

Coating Layer

To improve adhesion to a hardcoat layer and adhesion to UV ink, the laminated polyester film of the present invention preferably comprises a coating layer laminated on at least one surface of the polyester film substrate, the coating layer being formed from a composition containing a urethane resin with a polycarbonate structure, a crosslinking agent, and a polyester resin. The coating layer may be formed on both surfaces of the polyester film. Alternatively, the coating layer may be formed on only one surface of the polyester film, and a different resin coating layer may be formed on the other surface.

Each of the components of the coating layer is described below in detail.

Urethane Resin

The urethane resin with a polycarbonate structure in the present invention contains at least a urethane bond moiety derived from a polycarbonate polyol component and a polyisocyanate component, and further contains a chain extender as necessary.

When the urethane resin with a polycarbonate structure in the present invention is synthesized and polymerized, the lower limit of the mass ratio of the polycarbonate polyol component to the polyisocyanate component (the mass of the polycarbonate polyol component/the mass of the polyisocyanate component) is preferably 0.5, more preferably 0.6, even more preferably 0.7, particularly preferably 0.8, and most preferably 1.0. A mass ratio of 0.5 or more is preferred because the proportion of OCOO bonds at the coating layer surface, i.e., X, can be efficiently adjusted to 2% or more. When the urethane resin with a polycarbonate structure in the present invention is synthesized and polymerized, the upper limit of the mass ratio of the polycarbonate polyol component to the polyisocyanate component is preferably 2.5, more preferably 2.2, even more preferably 2.0, particularly preferably 1.7, and most preferably 1.5. A mass ratio of 2.5 or less is preferred because the proportion of OCOO bonds at the coating layer surface, i.e., X, can be efficiently adjusted to 10% or less. Further, in a nitrogen element distribution curve based on element distribution measurement in the depth direction by X-ray photoelectron spectroscopy, B - A can be effectively adjusted to 0.5 at% or more, and c - b can be effectively adjusted to 300 seconds or less.

The polycarbonate polyol component used to synthesize and polymerize the urethane resin with a polycarbonate structure in the present invention preferably contains an aliphatic polycarbonate polyol having excellent heat resistance and hydrolysis resistance. Examples of the aliphatic polycarbonate polyol include aliphatic polycarbonate diols, aliphatic polycarbonate triols, and the like. Preferably, aliphatic polycarbonate diols can be used. Examples of aliphatic polycarbonate diols that can be used to synthesize and polymerize the urethane resin with a polycarbonate structure in the present invention include aliphatic polycarbonate diols obtained by reacting one or more diols, such as ethylene glycol, propylene glycol, 1,3-propanediol, 1,4-butanediol, 1,5-pentanediol, 3-methyl-1,5-pentanediol, 1,6-hexanediol, 1,9-nonanediol, 1,8-nonanediol, neopentyl glycol, diethylene glycol, and dipropylene glycol, with, for example, a carbonate, such as dimethyl carbonate, ethylene carbonate, or phosgene; and the like.

In the present invention, the polycarbonate polyol preferably has a number average molecular weight of 500 to 1800, more preferably 600 to 1700, and most preferably 700 to 1500. A number average molecular weight of 500 or more is preferred because the proportion of OCOO bonds at the coating layer surface i.e., X, can be effectively adjusted to 10% or less. A number average molecular weight of 1800 or less is preferred because in a nitrogen element distribution curve based on element distribution measurement in the depth direction by X-ray photoelectron spectroscopy, B - A can be effectively adjusted to 0.5 or more, and c - b can be effectively adjusted to 300 seconds or less.

Examples of polyisocyanate components that can be used to synthesize and polymerize the urethane resin with a polycarbonate structure in the present invention include aromatic aliphatic diisocyanates, such as xylylene diisocyanate; alicyclic diisocyanates, such as isophorone diisocyanate, 4,4-dicyclohexylmethane diisocyanate, and 1,3-bis(isocyanatomethyl)cyclohexane; aliphatic diisocyanates, such as hexamethylene diisocyanate and 2,2,4-trimethylhexamethylene diisocyanate; and polyisocyanates obtained by adding one or more of these compounds to, for example, trimethylolpropane. The aromatic aliphatic diisocyanates, alicyclic diisocyanates, aliphatic diisocyanates, and the like are preferred because there is no problem of yellowing when they are used. They are also preferred because the resulting coating film is not overly hard, the stress due to thermal shrinkage of the polyester film substrate can be relaxed, and good adhesion is exhibited.

Examples of chain extenders include glycols, such as ethylene glycol, diethylene glycol, 1,4-butanediol, neopentyl glycol, and 1,6-hexanediol; polyhydric alcohols, such as glycerol, trimethylolpropane, and pentaerythritol; diamines, such as ethylenediamine, hexamethylenediamine, and piperazine; amino alcohols, such as monoethanolamine and diethanolamine; thiodiglycols, such as thiodiethylene glycol; and water.

The coating layer in the present invention is preferably formed by an in-line coating method described later, using a water-based coating liquid. It is thus desirable that the urethane resin of the present invention has water solubility or water dispersibility. The phrase "water solubility or water dispersibility" means dispersing in water or an aqueous solution containing a water-soluble organic solvent in an amount of less than 50 mass%.

To impart water dispersibility to the urethane resin, a sulfonic acid (salt) group or a carboxylic acid (salt) group can be introduced (copolymerized) into the urethane molecular skeleton. In order to maintain moisture resistance, it is preferable to introduce a carboxylic acid (salt) group, which is weakly acidic. A nonionic group, such as a polyoxyalkylene group, can also be introduced.

To introduce a carboxylic acid (salt) group into the urethane resin, for example, a polyol compound containing a carboxylic acid group, such as dimethylolpropanoic acid or dimethylolbutanoic acid, is introduced as a polyol component (copolymerization component), and neutralization is performed using a salt-forming agent. Specific examples of salt-forming agents include ammonia; trialkylamines, such as trimethylamine, triethylamine, triisopropylamine, tri-n-propylamine, and tri-n-butylamine; N-alkylmorpholines, such as N-methylmorpholine and N-ethylmorpholine; and N-dialkylalkanolamines, such as N-dimethylethanolamine and N-diethylethanolamine. These may be used singly, or in a combination of two or more.

When a polyol compound containing a carboxylic acid (salt) group is used as a copolymerization component to impart water dispersibility, the molar percentage of the polyol compound containing a carboxylic acid (salt) group in the urethane resin is preferably 3 to 60 mol%, and more preferably 5 to 40 mol%, based on the entire polyisocyanate component of the urethane resin taken as 100 mol%. A molar percentage of less than 3 mol% may make it difficult to ensure water dispersibility. A molar percentage of more than 60 mol% may reduce water resistance, resulting in decreased wet-heat resistance.

The urethane resin of the present invention may have a blocked isocyanate bonded to one or more terminals thereof to improve toughness.

Crosslinking Agent

The crosslinking agent contained in the composition for forming the coating layer in the present invention is preferably a blocked isocyanate, more preferably a blocked isocyanate containing three or more functional groups, and particularly preferably a blocked isocyanate containing four or more functional groups. These blocked isocyanates improve blocking resistance and adhesion to a hardcoat layer. The use of a blocked isocyanate crosslinking agent is preferred because B - A can be effectively adjusted to 0.5 at% or more in a nitrogen element distribution curve based on element distribution measurement in the depth direction by X-ray photoelectron spectroscopy.

The lower limit of the boiling point of the blocking agent of the blocked isocyanate is preferably 150°C, more preferably 160°C, even more preferably 180°C, particularly preferably 200°C, and most preferably 210°C. The higher the boiling point of the blocking agent, the more the volatilization of the blocking agent by application of heat is suppressed in the drying process after application of the coating liquid or in the film-forming process in the case of an in-line coating method, and the more the formation of minute irregularities on the coating surface is suppressed, thereby improving transparency of the film. The upper limit of the boiling point of the blocking agent is not particularly limited; about 300°C seems to be the upper limit in terms of productivity. Since the boiling point is related to the molecular weight, it is preferable to use a blocking agent having a high molecular weight in order to increase the boiling point of the blocking agent. The blocking agent preferably has a molecular weight of 50 or more, more preferably 60 or more, and even more preferably 80 or more.

The upper limit of the dissociation temperature of the blocking agent from the blocked isocyanate is preferably 200°C, more preferably 180°C, even more preferably 160°C, particularly preferably 150°C, and most preferably 120°C. The blocking agent dissociates from the functional groups by application of heat in the drying process after application of the coating liquid, or in the film-forming process in the case of an in-line coating method, to produce regenerated isocyanate groups. Thus, the crosslinking reaction with the urethane resin and the like proceeds, and the adhesion is improved. When the temperature at which the blocking agent dissociates from the blocked isocyanate is equal to or lower than the above temperature, the dissociation of the blocking agent sufficiently proceeds, resulting in good adhesion and particularly good wet-heat resistance.

Examples of blocking agents having a dissociation temperature of 120°C or less and a boiling point of 150°C or more that can be used for the blocked isocyanate of the present invention include bisulfite-based compounds, such as sodium bisulfite; pyrazole-based compounds, such as 3,5-dimethylpyrazole, 3-methylpyrazole, 4-bromo-3,5-dimethylpyrazole, and 4-nitro-3,5-dimethylpyrazole; active methylene-based compounds, such as malonic acid diesters (dimethyl malonate, diethyl malonate, di-n-butyl malonate, and di-2-ethylhexyl malonate); methyl ethyl ketone; and triazole-based compounds, such as 1,2,4-triazole. Of these, the pyrazole-based compounds are preferred in terms of wet-heat resistance and yellowing resistance.

The polyisocyanate that is a precursor of the blocked isocyanate of the present invention is obtained by introducing a diisocyanate. Examples include urethane-modified products, allophanate-modified products, urea-modified products, biuret-modified products, urethodione-modified products, urethoimine-modified products, isocyanurate-modified products, carbodiimide-modified products, and the like, of diisocyanates.

Examples of diisocyanates include aromatic diisocyanates, such as 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 1,5-naphthylene diisocyanate, 1,4-naphthylene diisocyanate, phenylene diisocyanate, tetramethylxylylene diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, and 3,3'-dimethoxydiphenyl-4,4'-diisocyanate; aromatic aliphatic diisocyanates, such as xylylene diisocyanate; alicyclic diisocyanates, such as isophorone diisocyanate, 4,4-dicyclohexylmethane diisocyanate, and 1,3-bis(isocyanatomethyl)cyclohexane; and aliphatic diisocyanates, such as hexamethylene diisocyanate and 2,2,4-trimethylhexamethylene diisocyanate. The aliphatic and alicyclic diisocyanates and modified products thereof are preferred in terms of transparency, adhesion, and wet-heat resistance, and are preferred for optical applications that require high transparency without yellowing.

To impart water solubility or water dispersibility to the blocked isocyanate in the present invention, a hydrophilic group may be introduced into the precursor polyisocyanate. Examples of hydrophilic groups include (1) quaternary ammonium salts of dialkylamino alcohols, quaternary ammonium salts of dialkylaminoalkylamines, and the like; (2) sulfonic acid salts, carboxylic acid salts, phosphoric acid salts, and the like; and (3) polyethylene glycol, polypropylene glycol, and the like that are mono-endcapped with an alkoxy group. The blocked isocyanate becomes (1) cationic, (2) anionic, and (3) nonionic when the hydrophilic moieties are individually introduced. Among these, anionic blocked isocyanates and nonionic blocked isocyanates are preferred because they are easily compatible with other water-soluble resins, many of which are anionic. Moreover, anionic blocked isocyanates have excellent compatibility with other resins; and nonionic blocked isocyanates have no ionic hydrophilic groups, and are thus preferable for improving wet-heat resistance.

The anionic hydrophilic groups are preferably those containing a hydroxyl group for introduction into the polyisocyanate, and a carboxylic acid group for imparting hydrophilic properties. Examples include glycolic acid, lactic acid, tartaric acid, citric acid, oxybutyric acid, oxyvaleric acid, hydroxypivalic acid, dimethylolacetic acid, dimethylolpropanoic acid, dimethylolbutanoic acid, and carboxylic acid group-containing polycaprolactone. To neutralize the carboxylic acid group, an organic amine compound is preferably used. Examples of organic amine compounds include ammonia; $C_{1-20}$ linear or branched primary, secondary, or tertiary amines, such as methylamine, ethylamine, propylamine, isopropylamine, butylamine, 2-ethylhexylamine, cyclohexylamine, dimethylamine, diethylamine, dipropylamine, diisopropylamine, dibutylamine, trimethylamine, triethylamine, triisopropylamine, tributylamine, and ethylenediamine; cyclic amines, such as morpholine, N-alkylmorpholine, and pyridine; hydroxyl group-containing amines, such as monoisopropanolamine, methylethanolamine, methylisopropanolamine, dimethylethanolamine, diisopropanolamine, diethanolamine, triethanolamine, diethylethanolamine, and triethanolamine; and the like.

The nonionic hydrophilic groups include polyethylene glycol and polypropylene glycol, both of which are mono-endcapped with an alkoxy group, wherein the number of repeating units of the ethylene oxide and/or the propylene oxide is preferably 3 to 50, and more preferably 5 to 30. If the number of repeating units is small, the compatibility with resins may become poor, and the haze may increase. If the number of repeating units is large, the adhesion under high temperature and high humidity may decrease. To improve water dispersibility, nonionic, anionic, cationic, and amphoteric surfactants can be added to the blocked isocyanate of the present invention. Examples include nonionic surfactants, such as polyethylene glycol and polyhydric alcohol fatty acid esters; anionic surfactants, such as fatty acid salts, alkyl sulfuric acid esters, alkylbenzenesulfonic acid salts, sulfosuccinic acid salts, and alkyl phosphoric acid salts; cationic surfactants, such as alkylamine salts and alkylbetaine; amphoteric surfactants, such as carboxylic acid amine salts, sulfonic acid amine salts, and sulfuric acid ester salts; and the like.

The coating liquid may contain a water-soluble organic solvent in addition to water. For example, the coating liquid may contain the organic solvent used in the reaction; or the organic solvent used in the reaction may be removed, and another organic solvent may be added.

Polyester Resin

The polyester resin used to form the coating layer in the present invention may be linear; however, it is preferably a polyester resin containing a dicarboxylic acid and branched glycol as constituents. Examples of the dicarboxylic acid that mainly constitutes the polyester resin include terephthalic acid, isophthalic acid, and 2,6-naphthalenedicarboxylic acid. Other examples thereof include aliphatic dicarboxylic acids, such as adipic acid and sebacic acid; and aromatic dicarboxylic acids, such as terephthalic acid, isophthalic acid, phthalic acid, and 2,6-naphthalenedicarboxylic acid. The branched glycol is a branched alkyl group-containing diol. Examples include 2,2-dimethyl-1,3-propanediol, 2-methyl-2-ethyl-1,3-propanediol, 2-methyl-2-butyl-1,3-propanediol, 2-methyl-2-propyl-1,3-propanediol, 2-methyl-2-isopropyl-1,3-propanediol, 2-methyl-2-n-hexyl-1,3-propanediol, 2,2-diethyl-1,3-propanediol, 2-ethyl-2-n-butyl-1,3-propanediol, 2-ethyl-2-n-hexyl-1,3-propanediol, 2,2-din-butyl-1,3-propanediol, 2-n-butyl-2-propyl-1,3-propanediol, 2,2-di-n-hexyl-1,3-propanediol, and the like.

In the preferred embodiment described above, the content of the branched glycol component in the polyester resin is preferably 10 mol% or more, and more preferably 20 mol% or more of the entire glycol component. As a glycol component other than the compounds mentioned above, ethylene glycol is most preferable. Diethylene glycol, propylene glycol, butanediol, hexanediol, 1,4-cyclohexanedimethanol, or the like may be used as long as the amount thereof is small.

As the dicarboxylic acid, which is a constituent of the polyester resin, terephthalic acid or isophthalic acid is most preferred. Other dicarboxylic acids, especially aromatic dicarboxylic acids, such as diphenylcarboxylic acid and 2,6-naphthalenedicarboxylic acid, may be added for copolymerization as long as the amounts thereof are small. In addition to the above dicarboxylic acids, it is preferable to use 5-sulfoisophthalic acid in the range of 1 to 10 mol% for copolymerization, in order to impart water dispersibility to the copolyester-based resin. Examples include sulfoterephthalic acid, 5-sulfoisophthalic acid, 4-sulfonaphthaleneisophthalic acid-2,7-dicarboxylic acid, 5-(4-sulfophenoxy)isophthalic acid, and salts thereof.

The lower limit of the content of the crosslinking agent is preferably 5 mass%, more preferably 7 mass%, even more preferably 10 mass%, and most preferably 12 mass%, based on the total solids content of the polyester resin, the urethane resin with a polycarbonate structure, and the crosslinking agent in the coating liquid taken as 100 mass%. A crosslinking agent content of 5 mass% or more is preferred because B - A can be easily adjusted to 0.5 at% or more in a nitrogen element distribution curve based on element distribution measurement in the depth direction by X-ray photoelectron spectroscopy. The upper limit of the content of the crosslinking agent is preferably 50 mass%, more preferably 40 mass%, even more preferably 35 mass%, and most preferably 30 mass%. A crosslinking agent content of 50 mass% or less is preferred because c - b can be easily adjusted to 300 seconds or less in a nitrogen element distribution curve based on element distribution measurement in the depth direction by X-ray photoelectron spectroscopy.

The lower limit of the content of the urethane resin with a polycarbonate structure is preferably 5 mass%, based on the total solids content of the polyester resin, the urethane resin with a polycarbonate structure, and the crosslinking agent in the coating liquid taken as 100 mass%. A urethane resin content of 5 mass% or more is preferred because the proportion of OCOO bonds at the coating layer surface, i.e., X, can be easily adjusted to 2.0% or more. The upper limit of the content of the urethane resin with a polycarbonate structure is preferably 50 mass%, more preferably 40 mass%, even more preferably 30 mass%, and most preferably 20 mass%. A urethane resin content of 50 mass% or less is preferred because the proportion of OCOO bonds at the coating layer surface, i.e., X, can be easily adjusted to 10.0% or less.

The lower limit of the content of the polyester resin is preferably 10 mass%, more preferably 20 mass%, even more preferably 30 mass%, particularly preferably 35 mass%, and most preferably 40 mass%, based on the total solids content of the polyester resin, the urethane resin, and the crosslinking agent in the coating liquid taken as 100 mass%. A polyester resin content of 10 mass% or more is preferred because the adhesion between the coating layer and the polyester film substrate is good. The upper limit of the content of the polyester resin is preferably 70 mass%, more preferably 67 mass%, even more preferably 65 mass%, particularly preferably 62 mass%, and most preferably 60 mass%. A polyester resin content of 70 mass% or less is preferred because the wet-heat resistance of a hard-coated film after hard coating is good.

Additives

The coating layer in the present invention may contain known additives, such as surfactants, antioxidants, heat-resistant stabilizers, weathering stabilizers, ultraviolet absorbers, organic lubricants, pigments, dyes, organic or inorganic particles, antistatic agents, and nucleating agents, in the range where the effect of the present invention is not impaired.

In a preferable embodiment of the present invention, particles are added to the coating layer to further improve the blocking resistance of the coating layer. In the present invention, examples of the particles to be added to the coating layer include inorganic particles of titanium oxide, barium sulfate, calcium carbonate, calcium sulfate, silica, alumina, talc, kaolin, clay, or mixtures thereof, or combinations with other general inorganic particles, such as calcium phosphate, mica, hectorite, zirconia, tungsten oxide, lithium fluoride, and calcium fluoride; styrene, acrylic, melamine, benzoguanamine, silicone, and other organic polymer particles; and the like.

The average particle size of the particles in the coating layer (average particle size based on the number of particles measured with a scanning electron microscope (SEM); hereafter the same) is preferably 0.04 to 2.0 $\mu$m, and more preferably 0.1 to 1.0 $\mu$m. Inert particles having an average particle size of 0.04 $\mu$m or more are preferred because they facilitate formation of unevenness on the film surface, resulting in improved handling properties of the film, such as sliding properties and winding properties, and good processability during bonding. Inert particles having an average particle size of 2.0 $\mu$m or less are preferred because they are less likely to drop off. The particle concentration in the coating layer is preferably 1 to 20 mass% in the solid components.

The average particle size of the particles is measured by observing the particles in the cross-section of the laminated polyester film with a scanning electron microscope. Specifically, 30 particles are observed, and the average value of the particle sizes of the particles is defined as the average particle size.

The shape of the particles is not particularly limited as long as it satisfies the object of the present invention, and spherical particles and non-spherical particles having an irregular shape can be used. The particle size of particles having an irregular shape can be calculated as an equivalent circle diameter. The equivalent circle diameter is a value obtained by dividing the area of the observed particle by n, calculating the square root, and doubling the value of the square root.

Production of Laminated Polyester Film

The method for producing the laminated polyester film of the present invention is described, taking a case using a polyethylene terephthalate (which hereinafter may be referred to as "PET") film substrate as an example. However, naturally, the method of the present invention is not limited to this example.

After a PET resin is sufficiently dried in vacuum, the resin is fed into an extruder, and the melted PET resin at about 280°C is melt-extruded in a sheet form from a T-die onto a rotating cooling roll, followed by cooling and solidifying the sheet by an electrostatic application to form an unstretched PET sheet. The unstretched PET sheet may be single-layered, or may be multilayered by a coextrusion method.

The obtained unstretched PET sheet is subjected to uniaxial stretching or biaxial stretching for crystal orientation. For example, in the case of biaxial stretching, the unstretched PET sheet is stretched 2.5- to 5.0-fold in the longitudinal direction with rolls heated to 80 to 120°C to obtain a uniaxially stretched PET film; the film is then held with clips at the ends thereof and guided to a hot-air zone heated to 80 to 180°C, followed by stretching 2.5- to 5.0-fold in the width direction. In the case of uniaxial stretching, the unstretched PET sheet is stretched 2.5- to 5.0-fold in a tenter. After stretching, the resulting film is guided to a heat treatment zone for heat treatment to complete crystal orientation.

The lower limit of the temperature of the heat treatment zone is preferably 170°C, and more preferably 180°C. A heat treatment zone temperature of 170°C or more is preferred because curing sufficiently proceeds, good blocking resistance are obtained in the presence of liquid water, and drying does not take a long time. The upper limit of the temperature of the heat treatment zone is preferably 230°C, and more preferably 200°C. A heat treatment zone temperature of 230°C or less is preferred because it reduces the likelihood of the physical properties of the film deteriorating.

The coating layer may be formed after the production of the film or in the production process. In particular, in terms of productivity, the coating layer is preferably formed at any stage of the production process of the film; i.e., the coating layer is preferably formed by applying the coating liquid to at least one surface of the unstretched or uniaxially stretched PET film.

The coating liquid may be applied to the PET film by using a known method. Examples of the method include reverse roll coating, gravure coating, kiss coating, die coating, roll brush coating, spray coating, air knife coating, wire bar coating, a pipe doctor method, impregnation coating, curtain coating, and the like. These methods may be used singly or in combination for application of the coating liquid.

In the present invention, the thickness of the coating layer can be suitably determined within the range of 0.001 to 2.00 $\mu$m; however, in order to achieve both processability and adhesion, the thickness is preferably within the range of 0.01 to 1.00 $\mu$m, more preferably 0.02 to 0.80 $\mu$m, and even more preferably 0.05 to 0.50 $\mu$m. A coating layer thickness of 0.001 $\mu$m or more is preferred due to good adhesion. A coating layer thickness of 2.00 $\mu$m or less is preferred, because blocking is less likely to occur.

The upper limit of the haze of the laminated polyester film of the present invention is preferably 1.5%, more preferably 1.3%, even more preferably 1.2%, and particularly preferably 1.0%. The laminated polyester film having a haze of 1.5% or less is preferred in terms of transparency, and can be suitably used for optical films that require transparency.

Examples

Next, the present invention is described below in more detail with reference to Examples and Comparative Examples. However, the present invention is not limited to the following Examples.

Production of Polyester Pellet P-1

High-purity terephthalic acid and ethylene glycol were placed at a molar ratio of 1:2 in a 2-liter stainless steel autoclave with a stirrer. Triethylamine was added in an amount of 0.3 mol% relative to the acid component. An esterification reaction was performed while water was distilled off from the reaction system at 250°C under a pressure of 0.25 MPa to obtain a mixture of bis(2-hydroxyethyl)terephthalate and an oligomer having an esterification ratio of about 95% (hereinafter referred to as a BHET mixture). Subsequently, while stirring the BHET mixture, a solution of antimony trioxide in ethylene glycol was added as a polymerization catalyst in an amount of 0.04 mol% in terms of antimony atoms relative to the acid component in the polyester, and the resulting mixture was further continuously stirred in a nitrogen atmosphere at normal pressure at 250°C for 10 minutes. Thereafter, while the temperature was raised to 280°C over a period of 60 minutes, the pressure of the reaction system was gradually reduced to 13.3 Pa (0.1 Torr), and a polycondensation reaction was further performed at 280°C and 13.3 Pa. After releasing the pressure, the resin under slight pressure was discharged in a strand shape into cold water, and quenched; then, it was maintained in the cold water for 20 seconds. The strands were cut into cylindrical pellets with a length of about 3 mm and a diameter of about 2 mm.

The polyester pellets obtained by melt-polymerization were dried under reduced pressure (at 13.3 Pa or less at 80°C for 12 hours), and subsequently subjected to crystallization treatment (at 13.3 Pa or less at 130°C for 3 hours, and further at 13.3 Pa or less at 160°C for 3 hours). After cooling, the polyester pellets were subjected to solid-phase polymerization in a solid-phase polymerization reactor while the reaction system was maintained at a pressure of 13.3 Pa or less and at a temperature of 215°C. Polyester pellets with an intrinsic viscosity (solvent: phenol/tetrachloroethane = 60/40) of 0.62 dl/g were thus obtained.

Preparation of Aluminum Compound

A 20 g/l aqueous basic aluminum acetate (hydroxyaluminum diacetate; produced by Aldrich) solution that was prepared by heat treatment with stirring at 80°C for 2 hours, and whose peak position chemical shift to a lower field side in a $^{27}$Al-NMR spectrum was confirmed was placed with an equal volume (volume ratio) of ethylene glycol in a flask, and stirred at room temperature for 6 hours. Water was then distilled off from the reaction system with stirring at 90 to 110°C under reduced pressure (133 Pa) for several hours to prepare a 20 g/l solution of the aluminum compound in ethylene glycol.

Preparation of Phosphorus Compound

As a phosphorus compound, Irganox 1222 (produced by Ciba Specialty Chemicals) was placed in a flask together with ethylene glycol, and heated with stirring in a nitrogen atmosphere at a liquid temperature of 160°C for 25 hours to prepare a 50 g/l solution of the phosphorus compound in ethylene glycol. $^{31}$P-NMR spectroscopy confirmed an about 60 mol% conversion to hydroxyl groups.

Preparation of Mixture of Solution of Aluminum Compound in Ethylene Glycol/Solution of Phosphorus Compound in Ethylene Glycol

The solution of the aluminum compound in ethylene glycol and the solution of the phosphorus compound in ethylene glycol obtained above in section Preparation of Aluminum Compound and in section Preparation of Phosphorus Compound were placed in a flask and mixed at room temperature to achieve a molar ratio of aluminum atoms to phosphorus atoms of 1:2, and stirred for 1 day to prepare a catalyst solution. The $^{27}$Al-NMR spectrum and $^{31}$P-NMR spectrum measurement results of the mixture solution both confirmed a chemical shift.

Production of Polyester Pellet P-2

The procedure was performed in the same manner as in section Production of Polyester Pellet P-1, except that the mixture of the solution of the aluminum compound in ethylene glycol/the solution of the phosphorus compound in ethylene glycol was used as a polycondensation catalyst and that this catalyst was added in an amount such that the resulting polyester mixture contained aluminum atoms in an amount of 0.014 mol% and phosphorus atoms in an amount of 0.028 mol%, relative to the acid component of the polyester. Polyester pellet P-2 with an intrinsic viscosity (solvent: phenol/tetrachloroethane = 60/40) of 0.65 dl/g was thus obtained.

Polymerization of Urethane Resin A-1 Having Polycarbonate Structure

Thirty-two parts by mass of 1,3-cyclohexyl diisocyanate, 7 parts by mass of dimethylolpropanoic acid, 58 parts by mass of polyhexamethylene carbonate diol having a number average molecular weight of 800, 3 parts by mass of neopentyl glycol, and 84.00 parts by mass of acetone as a solvent were placed into a four-necked flask equipped with a stirrer, a Dimroth condenser, a nitrogen introduction tube, a silica gel drying tube, and a thermometer. The resulting mixture was stirred at 75°C in a nitrogen atmosphere for 3 hours, and the reaction mixture was confirmed to have reached a predetermined amine equivalent. Subsequently, after the temperature of this reaction mixture was reduced to 40°C, 5.17 parts by mass of triethylamine was added to obtain a polyurethane prepolymer solution. Subsequently, 450 g of water was added to a reaction vessel equipped with a homodisper capable of high-speed stirring, and the temperature was adjusted to 25°C. While the resulting mixture was mixed with stirring at 2000 min$^{-1}$, a polyurethane prepolymer solution was added to obtain an aqueous dispersion. Acetone and a portion of water were then removed under reduced pressure, thus preparing a water-dispersible urethane resin solution (A-1) with a solids content of 34%.

Polymerization of Urethane Resin A-2 Having Polycarbonate Structure

Thirty-eight parts by mass of 4,4-dicyclohexylmethane diisocyanate, 9 parts by mass of dimethylolpropanoic acid, 53 parts by mass of polyhexamethylene carbonate diol having a number average molecular weight of 1000, and 84.00 parts by mass of acetone as a solvent were placed in a four-necked flask equipped with a stirrer, a Dimroth condenser, a nitrogen introduction tube, a silica gel drying tube, and a thermometer. The resulting mixture was stirred at 75°C in a nitrogen atmosphere for 3 hours, and the reaction mixture was confirmed to have reached the predetermined amine equivalent. Subsequently, after the temperature of the reaction mixture was reduced to 40°C, 5.17 parts by mass of triethylamine was added to obtain a polyurethane prepolymer solution. Subsequently, 450 g of water was added to a reaction vessel equipped with a homodisper capable of high-speed stirring, and the temperature was adjusted to 25°C. While the resulting mixture was mixed by stirring at 2000 min$^{-1}$, a polyurethane prepolymer solution was added to obtain an aqueous dispersion. Acetone and a portion of water were then removed under reduced pressure, thus preparing a water-dispersible urethane resin solution (A-2) with a solids content of 35%.

Polymerization of Urethane Resin A-3 Having Polycarbonate Structure

Thirty parts by mass of 4,4-dicyclohexylmethane diisocyanate, 16 parts by mass of polyethylene glycol monomethyl ether having a number average molecular weight of 700, 50 parts by mass of polyhexamethylene carbonate diol having a number average molecular weight of 1200, 4 parts by mass of neopentyl glycol, and 84.00 parts by mass of acetone as a solvent were placed in a four-necked flask equipped with a stirrer, a Dimroth condenser, a nitrogen introduction tube, a silica gel drying tube, and a thermometer. The resulting mixture was stirred at 75°C in a nitrogen atmosphere for 3 hours, and the reaction mixture was confirmed to have reached the predetermined amine equivalent. Subsequently, after the temperature of the reaction mixture was reduced to 40°C, a polyurethane prepolymer solution was obtained. Subsequently, 450 g of water was added to a reaction vessel equipped with a homodisper capable of high-speed stirring, and the temperature was adjusted to 25°C. While the resulting mixture was mixed by stirring at 2000 min$^{-1}$, a polyurethane prepolymer solution was added to obtain an aqueous dispersion. Acetone and a portion of water were then removed under reduced pressure to obtain a water-dispersible urethane resin solution (A-3) with a solids content of 35%.

Polymerization of Urethane Resin A-4 Having Polycarbonate Structure

Twenty-four parts by mass of 4,4-dicyclohexylmethane diisocyanate, 4 parts by mass of dimethylol butanoic acid, 71 parts by mass of polyhexamethylene carbonate diol having a number average molecular weight of 2000, 1 part by mass of neopentyl glycol, and 84.00 parts by mass of acetone as a solvent were placed in a four-necked flask equipped with a stirrer, a Dimroth condenser, a nitrogen introduction tube, a silica gel drying tube, and a thermometer. The resulting mixture was stirred at 75°C in a nitrogen atmosphere for 3 hours, and the reaction mixture was confirmed to have reached the predetermined amine equivalent. Subsequently, after the temperature of the reaction mixture was reduced to 40°C, 8.77 parts by mass of triethylamine was added to obtain a polyurethane prepolymer solution. Subsequently, 450 g of water was added to a reaction vessel equipped with a homodisper capable of high-speed stirring, and the temperature was adjusted to 25°C. While the resulting mixture was mixed by stirring at 2000 min$^{-1}$, a polyurethane prepolymer solution was added to obtain an aqueous dispersion. Acetone and a portion of water were then removed under reduced pressure, thus preparing a water-dispersible urethane resin solution (A-4) with a solids content of 34 mass%.

Polymerization of Polycarbonate Polyol Component-Free Urethane Resin A-5

A reaction was performed at a temperature of 70°C to 120°C for 2 hours by a multi-stage isocyanate polyaddition method using polyether polyol, an organic polyisocyanate, and diethylene glycol as a chain extender. The obtained urethane prepolymer was mixed with an aqueous bisulfite solution, and the reaction was allowed to proceed with fully stirring for about 1 hour to block the polymer. The reaction temperature was set to 60°C or less. The reaction mixture was then diluted with water to adjust a thermally reactive water-dispersible urethane resin solution (A-5) with a solids content of 20 mass%.

Polymerization of Urethane Resin A-6 Having Polycarbonate Structure

Fifty-four parts by mass of 4,4-dicyclohexylmethane diisocyanate, 16 parts by mass of polyethylene glycol monomethyl ether having a number average molecular weight of 700, 18 parts by mass of polyhexamethylene carbonate diol having a number average molecular weight of 1200, 12 parts by mass of neopentyl glycol, and 84.00 parts by mass of acetone as a solvent were placed in a four-necked flask equipped with a stirrer, a Dimroth condenser, a nitrogen introduction tube, a silica gel drying tube, and a thermometer. The resulting mixture was stirred at 75°C in a nitrogen atmosphere for 3 hours, and the reaction mixture was confirmed to have reached the predetermined amine equivalent. Subsequently, after the temperature of this reaction mixture had been reduced to 40°C, 8.77 parts by mass of triethylamine was added to obtain a polyurethane prepolymer solution. Subsequently, 450 g of water was added to a reaction vessel equipped with a homodisper capable of high-speed stirring, and the temperature was adjusted to 25°C. While the resulting mixture was mixed by stirring at 2000 min$^{-1}$, a polyurethane prepolymer solution was added to obtain an aqueous dispersion. Acetone and a portion of water were then removed under reduced pressure to obtain a water-dispersible urethane resin solution (A-6) with a solids content of 34 mass%.

Table 2 shows the following two items.

i) Mass ratio of the polycarbonate polyol component to the polyisocyanate component when a urethane resin for forming the coating layer is synthesized and polymerized (polycarbonate polyol component/polyisocyanate component)
ii) Molecular weight of the polycarbonate polyol component

Table 2

|  | i) Mass ratio (polycarbonate polyol component/ polyisocyanate component) | ii) Molecular weight of polycarbonate polyol component |
|---|---|---|
| A-1 | 1.8 | 800 |
| A-2 | 1.4 | 1000 |
| A-3 | 1.7 | 1200 |
| A-4 | 3 | 2000 |

(continued)

|  | i) Mass ratio (polycarbonate polyol component/ polyisocyanate component) | ii) Molecular weight of polycarbonate polyol component |
|---|---|---|
| A-5 | 0 | - |
| A-6 | 0.3 | 1200 |

Polymerization of Blocked Isocyanate Crosslinking Agent B-1

66.04 parts by mass of a polyisocyanate compound having an isocyanurate structure (Duranate TPA, produced by Asahi Kasei Corporation) prepared using hexamethylene diisocyanate as a starting material, and 17.50 parts by mass of N-methylpyrrolidone were placed in a flask equipped with a stirrer, a thermometer, and a reflux condenser tube. 25.19 parts by mass of 3,5-dimethylpyrazole (dissociation temperature: 120°C, boiling point: 218°C) was added dropwise. The resulting mixture was maintained in a nitrogen atmosphere at 70°C for 1 hour, and 5.27 parts by mass of dimethylolpropanoic acid was then added dropwise. After the reaction mixture was subjected to infrared spectrum measurement and the disappearance of the isocyanate group absorption peak was confirmed, 5.59 parts by mass of N,N-dimethylethanolamine and 132.5 parts by mass of water were then added, thus obtaining an aqueous blocked polyisocyanate dispersion (B-1) with a solids content of 40 mass%. The blocked isocyanate crosslinking agent had four functional groups.

Polymerization of Blocked Isocyanate Crosslinking Agent B-2

100 parts by mass of a polyisocyanate compound having an isocyanurate structure (Duranate TPA, produced by Asahi Kasei Corporation) prepared using hexamethylene diisocyanate as a starting material, 55 parts by mass of propylene glycol monomethyl ether acetate, and 30 parts by mass of polyethylene glycol monomethyl ether (average molecular weight: 750) were placed in a flask equipped with a stirrer, a thermometer, and a reflux condenser tube. The resulting mixture was maintained in a nitrogen atmosphere at 70°C for 4 hours. The temperature of the reaction mixture was then reduced to 50°C, and 47 parts by mass of methyl ethyl ketoxime was added dropwise. The reaction mixture was subjected to infrared spectrum measurement, and the disappearance of the isocyanate group absorption peak was confirmed. An oxime-blocked isocyanate crosslinking agent (B-2) with a solids content of 40 mass% was thus obtained. The blocked isocyanate crosslinking agent had three functional groups.

Polymerization of Carbodiimide B-3

168 parts by mass of hexamethylene diisocyanate and 220 parts by mass of polyethylene glycol monomethyl ether (M400, average molecular weight: 400) were placed in a flask equipped with a stirrer, a thermometer, and a reflux condenser and stirred at 120°C for 1 hour. Further, 26 parts by mass of 4,4'-dicyclohexylmethane diisocyanate and 3.8 parts by mass of 3-methyl-1-phenyl-2-phosphorene-1-oxide (2 mass% of total isocyanate) as a carbodiimidating catalyst were added. The resulting mixture was further stirred in a stream of nitrogen at 185°C for 5 hours. The reaction mixture was subjected to infrared spectrum measurement, and the disappearance of an absorption peak at a wavelength of 220 to 2300 cm$^{-1}$ was confirmed. After the reaction mixture was allowed to cool to 60°C, 567 parts by mass of ion exchange water was added. An aqueous carbodiimide resin solution (B-3) with a solids content of 40 mass% was thus obtained.

Polymerization of Polyester Resin C-1

194.2 parts by mass of dimethyl terephthalate, 184.5 parts by mass of dimethyl isophthalate, 14.8 parts by mass of dimethyl-5-sodium sulfoisophthalate, 233.5 parts by mass of diethylene glycol, 136.6 parts by mass of ethylene glycol, and 0.2 parts by mass of tetra-n-butyl titanate were placed in a stainless steel autoclave equipped with a stirrer, a thermometer, and a partial reflux condenser. A transesterification reaction was performed at a temperature of 160 to 220°C for 4 hours. Subsequently, after the temperature was raised to 255°C and the pressure of the reaction system was gradually reduced, a reaction was performed at a reduced pressure of 30 Pa for one hour and a half, thus obtaining a copolyester resin (C-1). The obtained copolyester resin (C-1) was pale yellow and transparent. The reduced viscosity of the copolyester resin (C-1) was measured to be 0.70 dl/g. The glass transition temperature as measured by DSC was 40°C.

Preparation of Aqueous Polyester Dispersion

Fifteen parts by mass of the polyester resin (C-1) and 15 parts by mass of ethylene glycol n-butyl ether were placed in a reactor equipped with a stirrer, a thermometer, and a reflux condenser. The resulting mixture was heated at 110°C and stirred to dissolve the resin. After the resin was completely dissolved, 70 parts by mass of water was gradually added to the polyester solution while stirring. After the addition, the resulting liquid was cooled to room temperature while stirring, thus preparing a milky-white aqueous polyester dispersion (Cw-1) with a solids content of 15 mass%.

Example 1

(1) Preparation of Coating Liquid

The following coating components were mixed in a mixed solvent of water and isopropanol to prepare a coating liquid having a mass ratio of urethane resin solution (A-1)/crosslinking agent (B-1)/aqueous polyester dispersion (Cw-1) of 25/26/49 based on solid content.

| | |
|---|---|
| Urethane resin solution (A-1): | 3.55 parts by mass |
| Crosslinking agent (B-1): | 3.16 parts by mass |
| Aqueous polyester dispersion (Cw-1): | 16.05 parts by mass |
| Particles (dry-process silica with an average particle size of 200 nm, solid content concentration: 3.5%): | 0.47 parts by mass |
| Particles (silica sol with an average particle size of 40 to 50 nm, solid content concentration: 30 mass%): | 1.85 parts by mass |
| Surfactant (silicone-based surfactant, solid content concentration: 10 mass%): | 0.30 parts by mass |

(2) Preparation of Laminated Polyester Film

As a film material polymer, the above polyester pellets (P-1), which had an intrinsic viscosity of 0.62 dl/g and contained substantially no particles, were dried under a reduced pressure of 133 Pa at 135°C for 6 hours. The dried pellets were then fed to an extruder, melted, and extruded in the form of a sheet at about 280°C. The resulting product was then quickly cooled, adhered, and solidified on a rotating cooling metal roll whose surface temperature was maintained at 20°C, to obtain an unstretched PET sheet.

The unstretched PET sheet was heated to 100°C using a group of heated rolls and an infrared heater, and then stretched 3.5-fold in the longitudinal direction using a group of rolls differing in peripheral speed, thus obtaining a uniaxially stretched PET film.

Subsequently, the coating liquid, which was allowed to stand at room temperature for 5 hours or more, was applied to one side of the PET film by roll-coating and then dried at 80°C for 20 seconds. The coating amount was adjusted so that the final amount of the dried coating layer (after biaxial stretching) becomes 0.15 g/m$^2$ (coating layer thickness after drying: 150 nm). Subsequently, the film was stretched 4.0-fold in the width direction at 120°C using a tenter, heated at 230°C for 5 seconds with the length of the film in the width direction being fixed, and then subjected to a 3% relaxation treatment in the width direction at 100°C for 10 seconds, thus obtaining a 100 μm laminated polyester film. Table 5 shows evaluation results.

Example 2

A laminated polyester film was obtained in the same manner as in Example 1, except that the urethane resin was changed to urethane resin (A-2).

Example 3

A laminated polyester film was obtained in the same manner as in Example 1, except that the urethane resin was changed to urethane resin (A-3).

Example 4

A laminated polyester film was obtained in the same manner as in Example 1, except that the crosslinking agent was changed to crosslinking agent (B-2).

Example 5

A laminated polyester film was obtained in the same manner as in Example 1, except that the following coating components were mixed in a mixed solvent of water and isopropanol to achieve a mass ratio of urethane resin solution (A-1)/crosslinking agent (B-1)/aqueous polyester dispersion (Cw-1) of 22/10/68 based on solid content.

| | |
|---|---|
| Urethane resin solution (A-1): | 2.71 parts by mass |
| Crosslinking agent (B-1): | 1.00 parts by mass |
| Aqueous polyester dispersion (Cw-1): | 19.05 parts by mass |
| Particles (dry-process silica with an average particle size of 200 nm, solid content concentration: 3.5%): | 0.47 parts by mass |
| Particles (silica sol with an average particle size of 40 to 50 nm, solid content concentration: 30 mass%): | 1.85 parts by mass |
| Surfactant (silicone-based surfactant, solid content concentration: 10 mass%): | 0.30 parts by mass |

Example 6

A laminated polyester film was obtained in the same manner as in Example 5, except that the urethane resin was changed to the urethane resin (A-2).
As shown in Table 5, "B - A", "b", and "c - b" values of the laminated polyester films obtained in Examples 1 to 6 fall within the ranges of the following formulas, and these laminated polyester films were thus satisfactory in terms of haze, adhesion to a hardcoat layer, and resistance to blocking.

$$(i)\ 0.5 \leq B - A\ (at\%) \leq 3.0$$

$$(ii)\ 30 \leq b\ (second) \leq 180$$

$$(iii)\ 30 \leq c - b\ (second) \leq 300$$

Further, "X" of the laminated polyester films obtained in Examples 1 to 6 satisfied the following formula, and the laminated polyester films were thus satisfactory in terms of UV ink adhesion.

$$(iv)\ 2.0 \leq X\ (\%) \leq 10.0$$

Example 7

A laminated polyester film was obtained in the same manner as in Example 1, except that the polyester pellets as a film material polymer were changed to polyester pellet (P-2).
As shown in Table 5, "B - A", "b", and "c - b" values of the laminated polyester film obtained in Example 7 fall within the ranges of the following formulas, and the laminated polyester film of Example 7 was thus confirmed to be satisfactory in terms of adhesion to a hardcoat layer and resistance to blocking.

$$(i)\ 0.5 \leq B - A\ (at\%) \leq 3.0$$

$$(ii)\ 30 \leq b\ (second) \leq 180$$

$$(iii)\ 30 \leq c - b\ (second) \leq 300$$

Further, "X" of the laminated polyester film obtained in Example 7 satisfies the following formula, and the laminated polyester film was satisfactory in terms of UV ink adhesion.

$$(iv) \quad 2.0 \leq X (\%) \leq 10.0$$

Further, as compared with the films obtained using polyester pellet P-1 in Examples 1 to 6, the film obtained in Example 7 had a smaller haze value, and was thus confirmed to have enhanced transparency.

Comparative Example 1

A laminated polyester film was obtained in the same manner as in Example 1, except that the following coating components were mixed in a mixed solvent of water and isopropanol to achieve a urethane resin solution (A-5)/aqueous polyester dispersion (Cw-1) ratio of 29/71 based on solid content.

| | |
|---|---|
| Urethane resin solution (A-5): | 6.25 parts by mass |
| Aqueous polyester dispersion (Cw-1): | 20.00 parts by mass |
| Catalyst for Elastron: | 0.50 parts by mass |
| Particle (dry process-silica with an average particle diameter of 200 nm, solid content concentration: 3.5%): | 1.02 parts by mass |
| Particle (silica sol with an average particle diameter of 40 nm, solid content concentration: 20 mass%): | 2.15 parts by mass |
| Surfactant (fluorine-based surfactant, solid content concentration: 10 mass%): | 0.30 parts by mass |

As shown in Table 5, the film obtained in Comparative Example 1 had an "X" value of less than 2.0%, and was thus confirmed to be unsatisfactory in terms of UV ink adhesion. Further, the film obtained in Comparative Example 1 had a "b" value of more than 180 seconds, and was thus confirmed to be unsatisfactory in terms of blocking resistance.

Comparative Example 2

A laminated polyester film was obtained in the same manner as in Example 1, except that the urethane resin was changed to urethane resin (A-4).

Comparative Example 3

A laminated polyester film was obtained in the same manner as in Example 1, except that the urethane resin was changed to urethane resin (A-4), and the crosslinking agent was changed to crosslinking agent (B-2).
As shown in Table 5, the films obtained in Comparative Examples 2 and 3 had a "B - A" value of less than 0.5 at%, and were thus confirmed to be unsatisfactory in terms of blocking resistance and adhesion to a hardcoat layer.

Comparative Example 4

A laminated polyester film was obtained in the same manner as in Example 1, except that the following coating components were mixed in a mixed solvent of water and isopropanol to achieve a urethane resin solution (A-4)/crosslinking agent (B-1) ratio of 70/30 based on solid content.

| | |
|---|---|
| Urethane resin solution (A-4): | 9.03 parts by mass |
| Crosslinking agent (B-1): | 3.38 parts by mass |
| Particles (dry-process silica with an average particle diameter of 200 nm, solid content concentration: 3.5%): | 0.52 parts by mass |
| Particles (silica sol with an average Particle diameter of 40 nm, solid content concentration: 30 mass%) | 1.80 parts by mass |
| Surfactant (silicone-based surfactant, solid content concentration: 10 mass%) | 0.30 parts by mass |

As shown in Table 5, the film obtained in Comparative Example 4 had a "c - b" value of more than 300 seconds, and was thus confirmed to be unsatisfactory in terms of haze. Further, the film obtained in Comparative Example 4 had an "X" value of more than 10.0%, and was thus confirmed to have unsatisfactory blocking resistance.

Comparative Example 5

A laminated polyester film was obtained in the same manner as in Example 1, except that the following coating components were mixed in a mixed solvent of water and isopropanol to achieve a urethane resin solution (A-4)/crosslinking agent (B-1) ratio of 20/80 based on solid content.

| | |
|---|---|
| Urethane resin solution (A-4): | 2.58 parts by mass |
| Crosslinking agent (B-1): | 9.00 parts by mass |

| | |
|---|---|
| Particles (dry-process silica with an average particle diameter of 200 nm, solid content concentration: 3.5%): | 0.52 parts by mass |
| Particles (silica sol with an average particle diameter of 40 nm, solid content concentration: 30 mass%): | 1.80 parts by mass |
| Surfactant (silicone-based surfactant, solid content concentration: 10 mass%): | 0.30 parts by mass. |

As shown in Table 5, the film obtained in Comparative Example 5 had a "c - b" value of more than 300 seconds, and was thus confirmed to be unsatisfactory in terms of haze.

Comparative Example 6

A laminated polyester film was obtained in the same manner as in Example 5, except that the urethane resin was changed to urethane resin (A-2), and the crosslinking agent was changed to crosslinking agent (B-3).

As shown in Table 5, the film obtained in Comparative Example 6 had a "B - A" value of less than 0.5 at%, and thus was confirmed to be unsatisfactory in terms of blocking resistance and adhesion to a hardcoat layer.

Comparative Example 7

A laminated polyester film was obtained in the same manner as in Example 5, except that the urethane resin was changed to urethane resin (A-6).

As shown in Table 5, the film obtained in Comparative Example 7 had an "X" value of less than 2.0%, and was thus confirmed to have unsatisfactory UV ink adhesion.

The evaluation methods used in the present invention are explained below.

(1) Haze

The haze of the obtained laminated polyester films was measured using a turbidimeter (NDH5000, produced by Nippon Denshoku Industries, Co., Ltd.) in accordance with JIS K 7136: 2000.

(2) Blocking Resistance

Two sheets of the same film sample were superimposed in such a manner that their coating layer surfaces faced each other. A load of 98 kPa was applied so that the two sheets of the same film sample were in close contact with each other and allowed to stand in an atmosphere of 50°C for 24 hours. The two sheets of the same film sample was then detached from each other, and the detached state was evaluated according to the following criteria.

A: The two sheets can easily be detached from each other, without any transfer of one coating layer to another.
B: The coating layers are basically maintained, but the surface layer of one coating layer is partially transferred to the opposing surface.
C: The two sheets are tightly adhered to each other in such a manner that the sheets cannot be detached from each other; or, even if the two sheets can be detached from each other, cleavage in the film substrates occurs.

(3) UV ink adhesion

A print was formed on a coating layer of a laminated polyester film using a UV ink (produced by T&K TOKA Co., Ltd., trade name "Best Cure UV161 Indigo S") with an "RI Tester" (trade name; produced by Akira Seisakusho Co.,

Ltd.) printing machine. Subsequently, the film coated with the ink layer was irradiated with 40 mJ/cm$^2$ of UV light using a high-pressure mercury lamp to thereby cure the UV-curable ink. Subsequently, cuts that reached the film substrate through the ink layer were made to form a grid of 100 squares on the ink layer surface using a cutter guide with spaced intervals of 2 mm. Next, Cellophane adhesive tape (produced by Nichiban Co., Ltd., No. 405, width: 24 mm) was applied to the cut surface in the form of a grid, and rubbed with an eraser to ensure complete adhesion. The Cellophane adhesive tape was then vertically peeled off from the ink layer surface of the ink laminated film, and the number of squares peeled off from the ink layer surface of the ink laminated film was visually counted to determine the adhesion between the ink layer and the film substrate according to the following formula. The squares that were partially peeled off were also counted as being peeled off. In the evaluation of ink adhesion, 100 (%) was rated as acceptable.

```
Ink adhesion (%) = 100 - (Number of squares that peeled off)
```

(4) Adhesion to Hardcoat layer

A coating liquid for forming a hardcoat layer of the following composition was applied to the coating layer of the laminated polyester film using a #5 wire bar, and dried at 80°C for 1 minute. After the solvent was removed, the laminated polyester film having a hardcoat layer formed thereon by the application was irradiated with 300 mJ/cm$^2$ of ultraviolet rays using a high-pressure mercury lamp to thereby obtain a hard-coated laminated polyester film.

Coating liquid for forming a hardcoat layer

| | |
|---|---|
| Methyl ethyl ketone | 36.00 mass% |
| Toluene | 18.00 mass% |
| Cyclohexanone | 6.00 mass% |
| Urethane acrylate (BS577, produced by Arakawa Chemical Industries, Ltd.) | 40.00 mass% |
| Surfactant | 0.10 mass% |
| Photopolymerization initiator (Irgacure 184, produced by Ciba Specialty Chemicals) | 2.00 mass% |

Subsequently, cuts that reached the film substrate through the ink layer were made to form a grid of 100 squares on the hardcoat layer surface using a cutter guide with spaced intervals of 2 mm. Next, Cellophane adhesive tape (produced by Nichiban Co., Ltd., No. 405, width: 24 mm) was applied to the cut surface in the form of a grid, and rubbed with an eraser to ensure complete adhesion. The Cellophane adhesive tape was then vertically peeled off from the hardcoat layer surface of the hard-coated laminated film, and the number of squares peeled off from the hardcoat layer surface of the hard-coated laminated film was visually counted to determine the adhesion between the hardcoat layer and the film substrate according to the following formula. The squares that were partially peeled off were also counted as being peeled off. In the evaluation of adhesion to the hardcoat layer, 95 (%) was graded as acceptable.

```
Adhesion to hardcoat layer (%) = 100 - (Number of squares that
peeled off)
```

(5) Element Distribution Measurement in the Depth Direction

The elemental distribution in the depth direction of the coating layer was measured by X-ray photoelectron spectroscopy (ESCA). An Ar cluster was used as an ion source for etching because of its expected less damage to organic materials. To ensure uniform etching, the samples were rotated during etching. In order to minimize the damage caused by X-ray irradiation, spectrum collection at each etching time was performed in snapshot mode, which allows for quick evaluation. For the convenience of evaluation, spectrum collection was performed every 30 seconds until the etching time reached 120 seconds, and then spectrum collection was performed every 60 seconds thereafter. The details of the measurement conditions are shown below. The background was removed by the Shirley method during the analysis.

- Equipment: K-Alpha$^+$ (produced by Thermo Fisher Scientific)
- Measurement conditions

Excited X-ray: monochromatic Al Kα-ray
X-Ray output: 12 kV, 2.5 mA
Photoelectron escape angle: 90°
Spot size: 200 μm Φ
Pass energy: 150 eV (Snapshot mode)
Ion gun acceleration voltage: 6 kV
Cluster size: Large
Etching rate: 10 nm/min (in terms of polystyrene) *
Sample rotation during etching: Yes

(To calculate the etching rate, a 155-nm-thick coating layer, formed by dissolving monodisperse polystyrene with a molecular weight Mn of 91000 (Mw/Mn = 1.05) in toluene and then spin-coating the solution onto a silicon wafer, was used.)

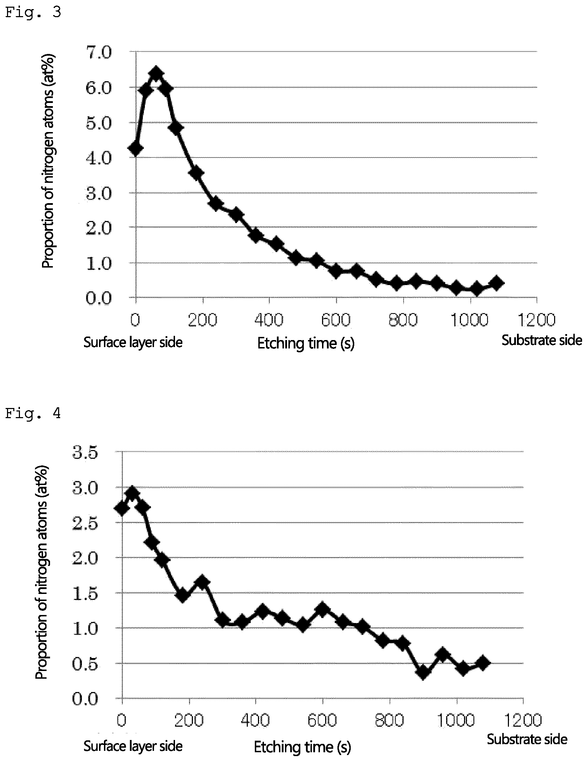

Based on the evaluated data, a nitrogen element distribution curve was drawn by taking the time of etching from the coating layer surface as the abscissa, and the proportion of the amount of nitrogen atoms relative to the total amount of carbon, oxygen, nitrogen, and silicon atoms (the proportion of nitrogen atoms) as the ordinate. Figs. 1, 3, and 4 show nitrogen element distribution curves of the laminated polyester film samples described below (Examples 2 and 5, and Comparative Example 6). Based on the nitrogen element distribution curve of Example 2 shown in Fig. 1, how to obtain characteristic values of the present invention is explained using Fig. 2. As shown in Fig. 2, when the proportion of nitrogen atoms at the coating layer surface on a side opposite to the polyester film substrate is defined as A (at%), the maximum proportion of nitrogen atoms is defined as B (at%), the etching time at which the proportion of nitrogen atoms has reached the maximum value B (at%) is defined as b (sec), and the etching time at which the proportion of nitrogen atoms has reached 1/2 B (at%) after b (sec) is defined as c (sec), these values are read, and B - A (at%) and c - b (sec) are obtained by calculation. The proportion of nitrogen atoms at the coating layer surface on the side opposite to the polyester film substrate refers to the proportion of nitrogen atoms at an etching time of 0 (seconds). (Note that the "s" in "etching time (s)" on the abscissa in Figs. 1 to 4 refers to the unit "second.")

(6) Measurement of the proportion of OCOO bonds in the surface region

The proportion of OCOO bonds in the surface region (X) was evaluated by X-ray photoelectron spectroscopy (ESCA). K-Alpha+ (produced by Thermo Fisher Scientific) was used as an instrument. The details of the measurement conditions are shown below. In the analysis, the background was removed by the Shirley method. The calculation of X was based on the average of the values measured at three or more points.

-    Measurement conditions

Excited X-ray: monochromatic Al Ka-ray
X-ray output: 12 kV, 6mA
Photoelectron escape angle: 90°
Spot size: 400 μm Φ
Pass energy: 50eV
Step: 0.1eV
Energy resolution: FWHM of Ag3d (5/2) spectrum = 0.75 eV

Figs. 5 and 6 are graphs showing analysis results of C1s spectra in the surface region of the laminated polyester films obtained in Example 6 and Comparative Example 1, respectively. Gray solid lines show actual measurement data of C1s spectra. The obtained peaks in actual measurement spectra were separated into several peaks, and the bond species corresponding to the peaks were each identified from the position and shape of each peak. Further, curve-fitting was performed on the peaks derived from each bond species, and the peak areas were calculated. Table 3 shows bond species corresponding to peaks (1) to (6) that may appear.

Table 3

|  | Bond type |
| --- | --- |
| (1) Black two-dot chain line | C-C bond |
| (2) Black dashed line | C-O bond, C-N bond |

EP 3 925 776 A1

(continued)

|  | Bond type |
|---|---|
| (3) Black three-dot chain line | C=O bond |
| (4) Black one-dot chain line | COO bond |
| (5) Black dotted line | OCOO bond |
| (6) Black solid line | $\pi$-$\pi$* bond |

The sum of the peak areas derived from the bond species in the C1s spectral region refers to the sum of the peak areas of peaks (1) to (6). The peak area derived from an OCOO bond refers to the peak area of peak (5). When the total area of the peaks derived from the bond species in the C1s spectral region is defined as 100%, X(%) represents the proportion of the area of peak (5) in terms of percentage (%).

Table 4 shows the peak area calculation results of peaks (1) to (6) of the films obtained in Example 6 and Comparative Example 1. As explained above, data on X (%) are percentage data of peak (5). Peak (3) and peak (6) of Example 6 and peak (3) and peak (5) of Comparative Example 1 were not detected.

Table 4

|  | Example 6 | Comparative Example 1 |
|---|---|---|
| (1) | 63.5% | 64.4% |
| (2) | 23.1% | 20.9% |
| (3) | - | - |
| (4) | 7.5% | 12.7% |
| (5) | 5.9% | - |
| (6) | - | 2.0% |

(7) Method for Measuring Number Average Molecular Weight of Polycarbonate Polyol

When a urethane resin having a polycarbonate structure is subjected to proton nuclear magnetic resonance spectroscopy ($^1$H-NMR), a peak derived from a methylene group adjacent to an OCOO bond is observed around 4.1 ppm. Further, in a field higher than this peak by about 0.2 ppm, a peak derived from a methylene group adjacent to a urethane bond formed by a reaction of polyisocyanate and polycarbonate polyol is also observed. The number average molecular weight of polycarbonate polyol was calculated from integral values of these two kinds of peaks and molecular weights of the monomers constituting the polycarbonate polyol.

Table 5 summarizes the evaluation results of the Examples and Comparative Examples.

Table 5

| | Compounds of the coating liquid | | | Content (solids content, mass%) | | | Nitrogen element distribution curve | | | Proportion X of OCOO bonds in the surface region (%) | Haze (%) | Blocking resistance | Adhesion to UV ink (%) | Adhesion to hardcoat layer (%) |
|---|---|---|---|---|---|---|---|---|---|---|---|---|---|---|
| | Urethane resin | Crosslinking agent | Polyester resin | Urethane resin | Crosslinking agent | Polyester resin | B-A (at %) | b (second) | c-b (second) | | | | | |
| Example 1 | A-1 | B-1 | Cw-1 | 25 | 26 | 49 | 2.4 | 60 | 160 | 6 | 0.8 | A | 100 | 100 |
| Example 2 | A-2 | B-1 | Cw-1 | 25 | 26 | 49 | 0.9 | 60 | 120 | 4.3 | 0.7 | A | 100 | 100 |
| Example 3 | A-3 | B-1 | Cw-1 | 25 | 26 | 49 | 0.7 | 60 | 180 | 6.6 | 0.6 | A | 100 | 100 |
| Example 4 | A-1 | B-2 | Cw-1 | 25 | 26 | 49 | 2.5 | 60 | 120 | 6.5 | 0.6 | A | 100 | 95 |
| Example 5 | A-1 | B-1 | Cw-1 | 22 | 10 | 68 | 2.2 | 60 | 180 | 6 | 0.6 | A | 100 | 100 |
| Example 6 | A-2 | B-1 | Cw-1 | 22 | 10 | 68 | 1.7 | 60 | 180 | 5.9 | 0.6 | A | 100 | 100 |
| Example 7 | A-1 | B-1 | Cw-1 | 25 | 26 | 49 | 2.3 | 60 | 160 | 6.2 | 0.4 | A | 100 | 100 |
| Comp. Ex. 1 | A-5 | - | Cw-1 | 30 | - | 70 | 0.7 | 240 | 480 | 0 | 0.6 | C | 0 | 90 |
| Comp. Ex. 2 | A-4 | B-1 | Cw-1 | 25 | 26 | 49 | 0.4 | 30 | 630 | 3.5 | 0.6 | B | 100 | 90 |
| Comp. Ex. 3 | A-4 | B-2 | Cw-1 | 25 | 26 | 49 | 0.4 | 30 | 630 | 3.5 | 0.6 | B | 100 | 90 |
| Comp. Ex. 4 | A-4 | B-1 | - | 70 | 30 | - | 1.6 | 30 | 900 | 11 | 3.9 | B | 100 | 90 |
| Comp. Ex. 5 | A-4 | B-1 | - | 20 | 80 | - | 1.4 | 30 | 560 | 6.2 | 4 | A | 100 | 100 |
| Comp. Ex. 6 | A-2 | B-3 | Cw-1 | 22 | 10 | 68 | 0.2 | 30 | 270 | 5.7 | 0.6 | C | 100 | 100 |

(continued)

| | Compounds of the coating liquid | | | Content (solids content, mass%) | | | Nitrogen element distribution curve | | | Proportion X of OCOO bonds in the surface region (%) | Haze (%) | Blocking resistance | Adhesion to UV ink (%) | Adhesion to hardcoat layer (%) |
|---|---|---|---|---|---|---|---|---|---|---|---|---|---|---|
| | Urethane resin | Crosslinking agent | Polyester resin | Urethane resin | Crosslinking agent | Polyester resin | B-A (at %) | b (second) | c-b (second) | | | | | |
| Comp. Ex. 7 | A-6 | B-1 | Cw-1 | 22 | 10 | 68 | 1 | 60 | 270 | 1.8 | 0.6 | A | 80 | 100 |

Industrial Applicability

According to the present invention, a laminated polyester film that is suitable for use in all fields, such as optical, packaging, and labeling applications, can be provided.

**Claims**

1. A laminated polyester film comprising a polyester film substrate and a coating layer on at least one surface of the polyester film substrate, the coating layer being formed by curing a composition containing a urethane resin with a polycarbonate structure, a crosslinking agent, and a polyester resin,

wherein in a nitrogen element distribution curve based on element distribution measurement of the coating layer in a depth direction by X-ray photoelectron spectroscopy, when the proportion of nitrogen atoms at a surface of the coating layer on a side opposite to the polyester film substrate is A (at%), the maximum value of the proportion of nitrogen atoms is B (at%), the etching time at which the proportion of nitrogen atoms becomes the maximum value B (at%) is b (sec), and the etching time at which the proportion of nitrogen atoms becomes 1/2 B (at%) after b (sec) is c (sec), the following formulas (i) to (iii) are satisfied; and

in a surface analysis spectrum measured by X-ray photoelectron spectroscopy, when the total area of peaks derived from bond species in a C1s spectral region is 100%, and the area of a peak derived from an OCOO bond is X (%), the following formula (iv) is satisfied:

$$\text{(i)} \ \ 0.5 \le B - A \ (at\%) \le 3.0$$

$$\text{(ii)} \ \ 30 \le b \ (sec) \le 180$$

$$\text{(iii)} \ \ 30 \le c - b \ (sec) \le 300$$

$$\text{(iv)} \ \ 2.0 \le X \ (\%) \le 10.0.$$

2. The laminated polyester film according to claim 1, which has a haze of 1.5% or less.

EP 3 925 776 A1

Fig. 1

Fig. 2

25

Fig. 3

Fig. 4

Fig. 5

Fig. 6

## INTERNATIONAL SEARCH REPORT

International application No.

PCT/JP2020/002294

### A. CLASSIFICATION OF SUBJECT MATTER
B32B 27/36(2006.01)i; C08J 7/04(2020.01)i
FI: C08J7/04 F CFD; B32B27/36

According to International Patent Classification (IPC) or to both national classification and IPC

### B. FIELDS SEARCHED
Minimum documentation searched (classification system followed by classification symbols)
B32B27/36; C08J7/04

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-274646 A (TOYOBO CO., LTD.) 09.12.2010 (2010-12-09) claims, examples | 1-2 |
| A | JP 2017-95734 A (TOYOBO CO., LTD.) 01.06.2017 (2017-06-01) claims, examples | 1-2 |
| A | JP 2012-223926 A (MITSUBISHI PLASTICS INC.) 15.11.2012 (2012-11-15) claims, examples | 1-2 |
| A | JP 2012-121196 A (TOYOBO CO., LTD.) 28.06.2012 (2012-06-28) claims, examples | 1-2 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 March 2020 (25.03.2020) | 07 April 2020 (07.04.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/002294

| Patent Documents referred in the Report | Publication Date | Patent Family | Publication Date |
|---|---|---|---|
| JP 2010-274646 A | 09 Dec. 2010 | (Family: none) | |
| JP 2017-95734 A | 01 Jun. 2017 | CN 108349228 A claims, examples | |
| JP 2012-223926 A | 15 Nov. 2012 | (Family: none) | |
| JP 2012-121196 A | 28 Jun. 2012 | TW 201224021 A claims, examples | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000229355 A
- JP 2016015491 A

- JP 2004082369 A